# EUROPÄISCHE PATENTSCHRIFT

(11) **EP 4 314 446 B1**
(45) Veröffentlichungstag und Bekanntmachung des Hinweises auf die Patenterteilung: **04.02.2026**
(21) Anmeldenummer: 22718625.1
(22) Anmeldetag: 25.03.2022
(51) Int. Cl.: B63B 39/03, B63B 43/06

(54) **FLÜSSIGKEITSSÄULENDÄMPFUNGSSYSTEM UND VERFAHREN ZUR ABSTIMMUNG**
BROADBAND LIQUID COLUMN DAMPING SYSTEM AND ADAPTATION METHOD
SYSTÈME D'AMORTISSEMENT DE COLONNE DE LIQUIDE À LARGE BANDE ET PROCÉDÉ D'ADAPTATION

(30) Priorität: 29.03.2021 DE 102021107849
(43) Veröffentlichungstag der Anmeldung: 07.02.2024
(73) Patentinhaber: Rheinisch-Westfälische Technische Hochschule (RWTH) Aachen Körperschaft des öffentlichen Rechts, 52062 Aachen (DE)
(72) Erfinder: ALTAY, Okyay, 52074 Aachen (DE)
(74) Vertreter: Cohausz Hannig Borkowski Wißgott
(86) Internationale Anmeldenummer: PCT/EP2022/057918
(87) Internationale Veröffentlichungsnummer: WO 2022/207489

(56) Entgegenhaltungen:
- CN-A- 108 644 298
- DE-A1- 102018 009 356
- JP-A- 2001 220 920

## Beschreibung

Die Erfindung betrifft ein Flüssigkeitssäulendämpfungssystem gemäß Anspruch 1, welches zur Dämpfung von Schwingungen, beispielsweise zur Dämpfung von Bauwerksschwingungen (z.B. Gebäude, Onshore- und Offshore Windenergieanlagen) oder auch zur Dämpfung von Schwingungen anderer Objekte eingesetzt werden kann, umfassend einen mit einer Flüssigkeit gefüllten Tank, bei dem wenigstens drei zueinander beabstandete, bevorzugt vertikale mit der Flüssigkeit gefüllte Säulen, insbesondere teilweise gefüllte Säulen des Tanks durch einen für alle Säulen gemeinsamen Basisbereich des Tanks verbunden sind, insbesondere wodurch mit den Säulen kommunizierende Flüssigkeitssäulen gebildet werden.

Die Erfindung betrifft auch ein Verfahren gemäß Anspruch 13 zur Frequenzabstimmung eines solchen Flüssigkeitssäulendämpfungssystems.

Der gemeinsame Basisbereich ist hier als ein solcher Bereich zu verstehen, über den die unteren Enden der Säulen insbesondere in horizontaler Richtung miteinander verbunden sind. Es handelt sich im Sinne der Erfindung und gemäß dem bekannten Stand der Technik um denjenigen Bereich, in dem sich die

Flüssigkeitsströme von und zu einer jeden Säule treffen und/oder durchmischen.

Durch diesen Bereich ist somit die Flüssigkeitskommunikation zwischen den Säulen sichergestellt.

Im Stand der Technik ist beispielsweise aus der Publikation DE 10 2018 009 356 A1 derselben Anmelderin ein solches Flüssigkeitssäulendämpfungssystem bekannt, bei dem die Säulen jeweils über einen horizontalen Arm in einen gemeinsamen Basisbereich übergehen. Das System beruht allgemein auf dem Wirkungsprinzip, dass bei Schwingungen die in dem Flüssigkeitssäulendämpfungssystem vorhandene Flüssigkeit, wie beispielsweise eine Newtonsche Flüssigkeit, bewegt wird und hierdurch eine Energiedissipation Weitere Dämpfungssysteme gemäß dem Stand der Technik sind in JP2001220920A und CN108644298A offenbart.

Das Grundprinzip eines solchen Flüssigkeitssäulendämpfungssystems wird auch als Frahmscher Schlingertank bezeichnet in Anerkennung der auf den Erfinder Frahm zurückgehenden Technik. Ein solcher nach diesem Grundprinzip arbeitender Tank bildet auch den Gegenstand der vorliegenden Erfindung.

Im genannten Stand der Technik ist je nach Schwingungsrichtung die Strömung im Basisbereich und den daran angrenzenden horizontalen Armen der Säulen unterschiedlich groß. Die Größe der Strömung bezogen auf die Richtung der Arme ist proportional zur vektoriellen Aufspaltung der anregenden Schwingung in die Richtungskomponenten, die durch die Armrichtungen definiert sind. Die Wirkung ist somit grundsätzlich omnidirektional, aber nicht in jeder möglichen Schwingungsrichtung optimiert. Eine Verbesserung der Dämpfung wird hingegen durch übliche Abstimmung der Eigenfrequenz in einer bestimmten Schwingungsrichtung mittels die Strömung beeinflussenden Elementen bewirkt, die innerhalb des Tanks wirken.

Es ist somit eine Aufgabe der Erfindung ein Flüssigkeitssäulendämpfungssystem bereitzustellen, dass der eingangs genannten Bauweise mit mehreren Säulen entspricht, was jedoch für eine bestimmte Schwingungsrichtung besser in der Dämpfung abstimmbar ist. Insbesondere soll die Eigenfrequenzabstimmung für eine bestimmte Schwingungsrichtung nicht überwiegend mit die Strömung beeinflussenden Elementen erfolgen, weil hierüber die Anpassung der Eigenfrequenz nur in geringem Maß möglich ist.

Diese Aufgabe wird erfindungsgemäß dadurch gelöst, dass der Tank um eine vertikale Achse rotierbar gelagert ist, insbesondere auf einer um die vertikale Achse rotierbaren Plattform, und in Richtungen senkrecht zur vertikalen Drehachse richtungsabhängig verschiedene Eigenfrequenzen aufweist, wobei der Tank durch Rotation um die Drehachse in seiner Eigenfrequenz für eine vorbestimmte Richtung abstimmbar ist. Diese vorbestimmte Richtung ist insbesondere die Richtung in der eine mit dem Tank zu schützende Struktur zur Schwingung angeregt ist.

Im Verfahren wird die Aufgabe dadurch gelöst, dass der Tank in Richtungen senkrecht zu einer vertikalen Drehachse richtungsabhängig verschiedene Eigenfrequenzen aufweist und der Tank durch Rotation um die Drehachse in seiner für eine vorbestimmte Richtung wirkenden wenigstens einen Eigenfrequenz abgestimmt wird.

Die Erfindung nutzt die Eigenschaft des Tanks, dass dieser konstruktiv so ausgebildet ist, dass er, insbesondere in einer horizontalen Ebene betrachtet, richtungsabhängig bereits unterschiedliche diskrete Eigenfrequenzen aufweist. Es besteht sodann durch die rotierbare Lagerung des Tanks die Möglichkeit, diesen um die vertikale Achse zu drehen und hierdurch, eine oder mehrere seiner richtungsabhängigen Eigenfrequenzen gezielt in der benötigten Wirkrichtung zur Wirkung zu bringen. Insbesondere kann der erfindungsgemäße Tank daher breitbandig abgestimmt werden.

Die Wirkrichtung ist dabei die Richtung in welcher die Dämpfung erfolgen soll. Diese stimmt üblicherweise mit der Anregungsrichtung überein. Vorzugsweise wird dabei diejenige eine Eigenfrequenz oder diejenige mehreren Eigenfrequenzen, bzw. die Tankrichtung, in welcher diese wirkt/wirken in die benötigte Wirkrichtung gelegt, die am nächsten zur Frequenz der aufgetretenen Schwingung liegt, um eine maximale Energiedissipation zu erzielen.

Beispielsweise kann es dafür vorgesehen sein, dass das Flüssigkeitssäulendämpfungssystem wenigstens einen Schwingungssensor umfasst, mit dem die Schwingungsrichtung und/oder die Schwingungsfrequenz einer das Flüssigkeitssäulendämpfungssystem umfassenden Anordnung, insbesondere eines Gebäudes, als Messgröße erfassbar ist und das Flüssigkeitssäulendämpfungssystem eingerichtet ist, den Tank in Abhängigkeit wenigstens einer der erfassten Messgrößen zu rotieren, insbesondere den Tank durch dessen Rotation in eine für die erfasste Schwingung gegenüber der vorherigen Stellung stärker dämpfende Stellung zu bewegen.

Im Gegensatz zum Stand der Technik sieht die Erfindung also nicht vor, die bei einem statischen Tank in einer Richtung fest vorliegende Eigenfrequenz lediglich zu ändern, sondern eine oder mehrere, insbesondere zwei von mehreren diskreten Eigenfrequenzen des Tanks für eine benötigte Wirkrichtung durch Rotation gezielt auszuwählen.

Vorzugsweise können richtungsabhängig unterschiedliche Eigenfrequenzen erzeugt sein durch in dem Tank richtungsabhängig unterschiedliche in Schwingung versetzbare Flüssigkeitsvolumina. Dies kann beispielsweise erzielt sein durch richtungsabhängig unterschiedliche Querschnitte der Säulen und der diese mit dem Basisbereich verbindenden Bereiche (Arme) und/oder durch richtungsabhängig unterschiedlichen Abstände der Säulen vom gemeinsamen Basisbereich, insbesondere von der gemeinsamen Drehachse, die vorzugsweise durch den Basisbereich verläuft.

Bei der Erfindung geht vorzugsweise eine jeweilige Säule, insbesondere aus der vertikalen Erstreckungsrichtung, an ihrem unteren Ende in die horizontale Richtung eines jeweiligen zur Säule gehörigen Armes über, z.B. durch einen rechtwinklig gebogenen Rohrabschnitt. Durch den Arm mündet die Säule in den gemeinsamen Basisbereich.

Innerhalb des Armes gibt es somit eine horizontal gerichtete Strömung, nämlich in der Verbindungsrichtung zwischen unterem Säulenende und dem gemeinsamen Basisbereich, bevorzugt welcher den Mittelpunkt oder einen mittleren Bereich des Dämpfungssystems bildet, in welchem alle Strömungen zusammenkommen.

Ein jeweiliger Arm kann in seiner Erstreckung zwischen Säule und dem Basisbereich bevorzugt geradlinig verlaufen, insbesondere in radialer Richtung bezüglich eines gemeinsamen Punktes, insbesondere eines gemeinsamen Mittelpunktes im gemeinsamen Basisbereich, um den die Säulen herum angeordnet sind, vorzugsweise um den herum der gesamte Tank drehbar ist. Ein Arm kann in einer anderen Ausführung auch einen nicht geradlinigen Verlauf, z.B. einen gebogenen Verlauf aufweisen, z.B. mit einer teilkreisförmigen Biegung.

Die Erfindung kann vorsehen, dass der Tank bezüglich zumindest einiger Säulen in der Verbindungsrichtung von der Säule zur Drehachse unterschiedliche Eigenfrequenzen hat. Insbesondere wenn einer jeden Säule nicht um die Drehachse herum eine andere Säule exakt um 180 Grad gegenüberliegend angeordnet ist kann vorgesehen sein, dass der Tank bezüglich jeder Säule in der Verbindungsrichtung von der Säule zur Drehachse eine andere Eigenfrequenz hat.

Besonders bevorzugt ist hingegen vorgesehen, dass der Tank wenigstens zwei, vorzugsweise wenigstens drei Säulenpaare aufweist, wobei die zwei Säulen wenigstens eines Säulenpaares, vorzugsweise die zwei Säulen von jedem Säulenpaar um einen Ort im Basisbereich aller Säulen, vorzugsweise um die Drehachse herum um 180 Grad beabstandet sind, vorzugsweise wobei die Arme beider Säulen eines Säulenpaares eine gemeinsame durch den Basisbereich, insbesondere durch die Drehachse verlaufende Mittenachse aufweisen und der Tank bei jedem Säulenpaar in der Verbindungsrichtung der beiden Säulen eine andere Eigenfrequenz hat. Die Säulen eines Säulenpaares sind um die Drehachse exakt einander gegenüberliegend angeordnet.

Durch die Anordnung von Säulenpaaren im Tank ergibt sich eine besonders scharfe Definition von diskreten Eigenfrequenzen jeweils in der Verbindungsrichtung bzw. Abstandsrichtung zwischen den zwei Säulen eines Paares.

Die Erfindung kann demnach vorsehen in einer benötigten Dämpfungsrichtung das zur Schwingungsdämpfung in dieser Richtung am besten passende Säulenpaar durch Rotation des Tanks auszurichten. Die am besten passende Richtung des Tanks kann dabei exakt einer Verbindungsrichtung der Säulen eines ausgewählten Säulenpaares entsprechend, kann aber auch zwischen den Verbindungsrichtungen zweier benachbarter Säulenpaare liegen, z.B. wenn keine der Eigenfrequenzen eines Säulenpaares exakt zur Anregungsfrequenz passt, aber die Eigenfrequenzen zweier Säulenpaare um die Anregungsfrequenz herum liegen.

Vorzugsweise kann es bei dieser Ausführung vorgesehen sein, dass der in radialer Richtung betrachtete Abstand zwischen den Säulen eines Säulenpaares für wenigstens einige, vorzugsweise für alle Säulenpaare unterschiedlich ist. Insbesondere können die Innenquerschnitte aller Säulen und Arme in dieser Ausführung gleich sein, insbesondere bis auf eine maximale Abweichung von plus/minus 20 %, bevorzugt von plus/minus 10 %. So können alle Säulen und Arme z.B. aus gebogenen Rohrelementen ausgebildet sein. Die unterschiedlichen Eigenfrequenzen bei den Säulenpaaren beruhen somit zumindest im Wesentlichen auf den unterschiedlichen Abständen der Säulen in den Säulenpaaren.

Besonders in dieser Ausführung kann die Erfindung vorsehen, dass die Arme aller Säulen im gleichen radialen Abstand zur Drehachse in den gemeinsamen Basisbereich einmünden.

Es besteht auch die Möglichkeit, dass der radiale Abstand zwischen den Säulen eines Säulenpaares bei allen Säulenpaaren gleich ist, wobei die Innenquerschnitte der Säulen und Arme bei den Säulenpaaren für jedes Paar unterschiedlich sind.

Hierdurch ergibt sich im Wesentlichen eine Tankkonfiguration mit drehsymmetrischer Ausgestaltung, was je nach Anwendung vorteilhaft sein kann. **In** dieser Ausgestaltung ergeben sich die unterschiedlichen Eigenfrequenzen bei jedem Säulenpaar durch die unterschiedlichen Querschnitte. Die Säulen und Arme eines Paares können vorzugsweise wiederum aus gebogenen Rohrelementen ausgebildet sind.

Bei allen Ausführungen kann vorzugsweise vorgesehen sein, dass die Säulen um einen Punkt, insbesondere um einen Mittelpunkt im Basisbereich, vorzugsweise um die vertikale Drehachse im Basisbereich gleichmäßig angeordnet sind, bevorzugt mit jeweils demselben Winkelabstand zwischen den Säulen oder Säulenpaaren.

Bei einer paarweisen Anordnung von Säulen ist es weiterhin bevorzugt, wenn zumindest ein Säulenpaar zu einem anderen Säulenpaar unter 90 Grad hinsichtlich der Erstreckungsrichtung der Arme angeordnet ist. Besonders bevorzugt weist ein Tank vier Säulenpaare auf, wobei die Arme benachbarter Säulenpaare unter 45 Grad zueinander angeordnet sind. So ist hierdurch jedem Säulenpaar ein anderes Säulenpaar zugeordnet, was senkrecht dazu orientiert ist.

Hierdurch kann erzielt werden, dass ein Säulenpaar mit der Erstreckungsrichtung seiner die Säulen verbindenden Arme in eine benötigte Wirkrichtung gedreht werden kann, so dass die Eigenfrequenz dieses Säulenpaares zur Wirkung kommt, wobei gleichzeitig ein anderes Säulenpaar mit der Erstreckungsrichtung seiner Arme dazu senkrecht liegt, und deswegen bzgl. der eingestellten Wirkrichtung nicht wirkt.

Es kann weiterhin vorgesehen sein, dass die Eigenfrequenz in der Richtung der Beabstandung der Säulen eines Säulenpaares, bei wenigstens einem der Säulenpaare, vorzugsweise bei allen änderbar ist durch wenigstens ein dem jeweiligen Säulenpaar zugeordnetes Stellelement, insbesondere strömungsdämpfendes Stellelement, vorzugsweise drehbare Klappe oder durch wenigstens ein das strömungsfähige Volumen eines Säulenpaares änderndes Element.

Sofern keine Säulenpaare zum Einsatz kommen kann hingegen die Eigenfrequenz in der Richtung der Beabstandung einer Säule zur Drehachse vorzugsweise geändert werden durch wenigstens ein der Säule und deren Arm zugeordnetes Stellelement, insbesondere strömungsdämpfendes Stellelement, vorzugsweise drehbare Klappe oder durch ein das strömungsfähige Volumen der Säule änderndes Element.

Die Erfindung kann daher bevorzugt vorsehen, dass in jedem Arm einer jeweiligen Säule oder jedem Paar von zwei sich um 180 Grad gegenüberliegenden Armen eines Säulenpaares ein verstellbares, insbesondere mit einem Aktor verstellbares Dämpfungselement angeordnet ist, mit dem der freie Strömungsquerschnitt im Arm verstellbar ist. Ein solches Dämpfungselement kann z.B. eine um eine Achse verschwenkbare Klappe sein.

Ein Dämpfungselement kann allgemein als ein Ventilstellglied ausgebildet sein, mit dem der freie Strömungsquerschnitt eines Armes zwischen einem Maximum und einem Minimum verändert werden kann. Z.B. kann auch eine Schiebeventil- oder Kugelventilanordnung eingesetzt werden. Es lässt sich so für jede Säule oder jedes Säulenpaar die Eigenfrequenz und somit die Dämpfung individuell einstellen, insbesondere ohne die Eigenfrequenz bei einer anderen Säule bzw. einem anderen Säulenpaar zu beeinflussen.

So kann zusätzlich zu einer Grobauswahl der Eigenfrequenz durch Drehung des Tanks eine Feineinstellung der Eigenfrequenz in der durch die Drehung ausgewählten Richtung erfolgen.

Die Erfindung kann es vorsehen, Schwingungsrichtungen und oder Schwingungsfrequenzen, z.B. einer Struktur (z.B. Gebäude), in welcher ein solches System eingesetzt wird, mit wenigstens einem Sensor messtechnisch zu erfassen und in Abhängigkeit der erfassten Schwingungsrichtung / Frequenz nicht nur die Drehstellung des Tanks zu beeinflussen, sondern auch die Dämpfung in den einzelnen Armen oder Säulenpaaren automatisch zu ändern, insbesondere so, dass die Dämpfung für die erfasste Richtung optimiert ist.

Hierfür kann eine Steuerung und/oder Regelung vorgesehen sein, die aus den erfassten Schwingungsdaten Ansteuersignale generiert, mit denen Aktoren angesteuert werden, welche die Drehung des Tanks bewirken und / oder die Dämpfungselemente in den Armen verstellen.

Die Erfindung kann weiterhin auch vorsehen, dass jede Säule in vertikaler Richtung, insbesondere im Ausschwenkbereich der Flüssigkeit, bevorzugt über die gesamte Säulenlänge, in mehrere, in der vertikalen Richtung parallel nebeneinanderliegende Kammern unterteilt ist, wobei wenigstens eine Teilanzahl aller Kammern, ggfs. alle Kammern ein Ventilelement, insbesondere ein mit einem Aktor verstellbares Ventilelement umfasst, mit dem die Flüssigkeitsströmung in und aus der jeweiligen Kammer beschränkbar und/oder absperrbar ist.

Durch wahlweises Auf- oder Absperren einer oder mehrerer Kammern kann der wirksame Querschnitt einer jeden Säule variiert werden und damit richtungsabhängig die Eigenfrequenz des Systems, insbesondere die eines Säulenpaares in der Verbindungsrichtung der beiden Säulen beeinflusst werden. Bevorzugt weisen die Kammern jeder Säule zumindest teilweise verschiedene Querschnitte auf, insbesondere so dass durch Variation der auf- und abgesperrten Kammern eine Vielzahl verschiedener Querschnitte der jeweiligen Säule einstellbar sind.

Die Erfindung kann vorsehen, dass das genannte Ventilelement einer jeweiligen Kammer am oberen Ende der Kammer angeordnet ist und mit dem Ventilelement der freie Querschnitt der Kammer zur umgebenden Atmosphäre variierbar, insbesondere absperrbar ist. So kann hierdurch festgelegt werden, ob die jeweilige Kammer Teil des kommunizierenden Volumens der jeweiligen Säule ist oder nicht. Jedes Ventilelement kann bevorzugt mit einem Aktor zumindest zwischen der maximal geschlossenen Stellung, bevorzugt der Absperrstellung und der maximal offenen Stellung umgestellt werden, insbesondere können auch Zwischenstellungen einstellbar sein.

Durch die bevorzugte Unterteilung des Säulenquerschnitts in Kammern erzielt die Erfindung zudem eine Stabilisierung der Flüssigkeitsbewegung in den Säulen, indem durch die Aufteilung der Flüssigkeitsoberfläche in kleineren Bereichen eine mögliche Wellenbildung verhindert wird.

Die Erfindung kann vorsehen, dass die Aktoren der Ventilelemente durch eine Steuerung / Regelung, insbesondere dieselbe zuvor genannte Steuerung / Regelung in Abhängigkeit von einer messtechnisch erfassten Schwingung der Struktur, in der das System verwendet wird, angesteuert werden, insbesondere, um so die Eigenfrequenz in Abhängigkeit der erfassten Frequenz der Schwingung einzustellen, insbesondere nach einer vorausgegangenen Drehung des Tanks.

Die Erfindung kann auch vorsehen, dass an zumindest einer Säule, insbesondere jeder Säule ein Füllstandssensor angeordnet ist, mit dem der aktuelle Füllstand der Flüssigkeit in der Säule und/oder die Flüssigkeitsbewegung in der Säule, insbesondere in einer nicht zur umgebenden Atmosphäre verschließbaren Kammer, bevorzugt dynamisch messbar ist. Die Dämpfung in jedem Arm und/oder die effektiv wirksamen Säulenquerschnitte können ebenso in Abhängigkeit der ermittelten Füllstände jeder Säule geändert werden.

Insgesamt ergibt sich so eine aktive Veränderbarkeit der Systemparameter eines erfindungsgemäßen Flüssigkeitssäulendämpfungssystems, insbesondere der Eigenfrequenz und der Dämpfung in Abhängigkeit der erfassten Schwingungsdaten, bevorzugt der Richtung und der Frequenz der Schwingung. Das System kann somit auch in-situ auf eine messtechnisch erfasste Schwingung, z.B. durch Erdbeben, Wind- und Wellenlasten, reagieren, bevorzugt die Systemparameter richtungsabhängig optimieren, insbesondere zumindest die Drehstellung des Tanks und vorzugsweise eine Feineinstellung der Eigenfrequenz des Tanks in der benötigten Wirkrichtung.

Ein Ausführungsbeispiel der Erfindung wird anhand der nachfolgenden Figuren erläutert. Die Figuren 1 und 2 zeigen das System dabei in Aufsicht und die Figur 3 im seitlichen Schnitt.

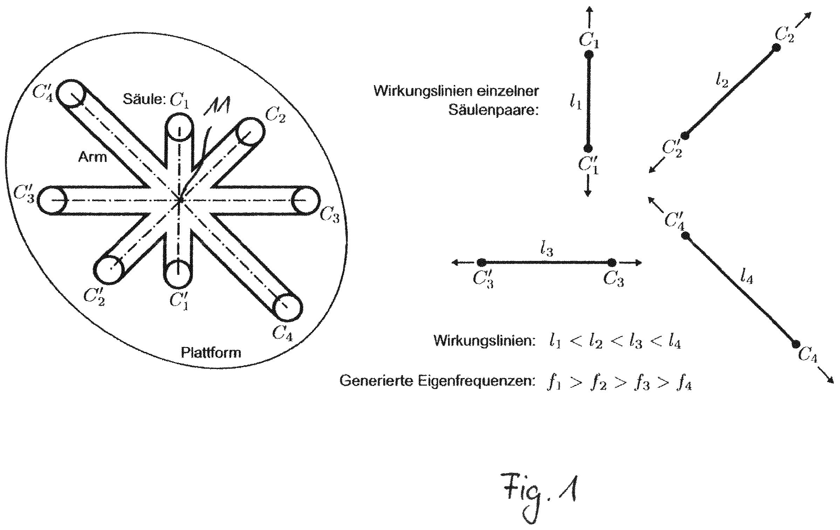

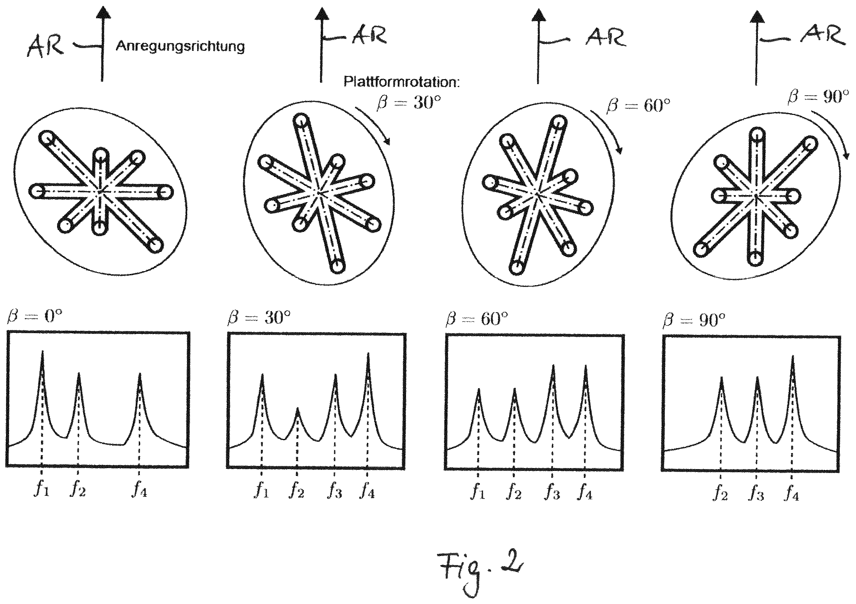

Die Abbildungen 1 und 2 zeigen eine konstruktiv besonders bevorzugte Ausgestaltung der Erfindung. Der Tank des Flüssigkeitssäulendämpfungssystems umfasst hier vier Säulenpaare, nämlich ein erstes Säulenpaar C1, C1', ein zweites Säulenpaar C2, C2', ein drittes Säulenpaar C3, C3' und ein viertes Säulenpaar C4, C4'. Die jeweiligen Säulen verlaufen vorzugsweise vertikal und sind nach oben offen. Eine solche vertikale Ausrichtung der Säulen ist für die Erfindung jedoch nicht zwingend nötig.

Am unteren Ende jeder Säule geht diese bzgl. der vertikalen Rotationsachse 11 in jeweils einen radial verlaufenden Arm über. Die Arme der Säulen eines Säulenpaares verlaufen dabei in derselben radialen Richtung, insbesondere sind deren Mittenachse kollinear. Der jeweilige Arm verbindet die jeweilige Säule mit dem gemeinsamen Basisbereich 6, der um die Drehachse 11 herum ausgebildet ist. Die Mittenachsen aller Arme kreuzen die vertikale Drehachse 11.

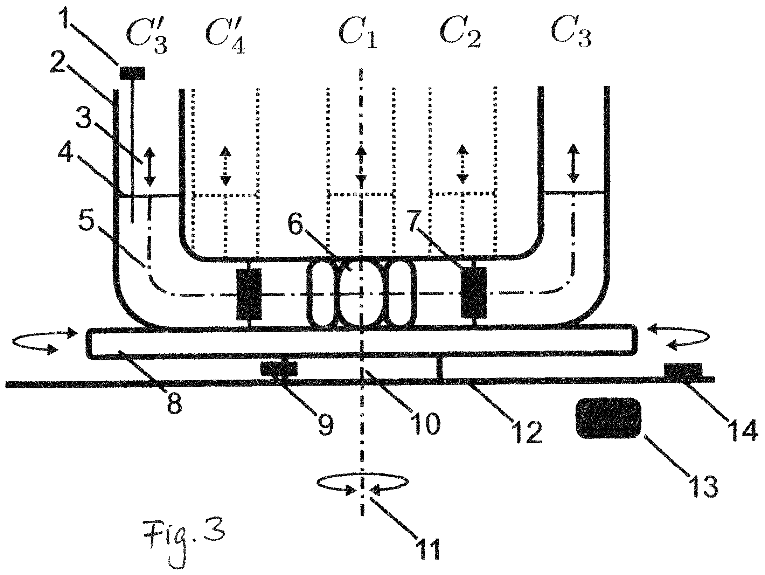

In jedem der Arme kann ein Ventilelement, hier in Form einer jeweils rotierbaren Blende / Klappe 7 angeordnet sein, mit dem der freie Strömungsquerschnitt in dem jeweiligen Arm verändert werden kann. Diese Ventilelemente 7 können nahe dem Basisbereich 6 angeordnet sein, liegen jedoch innerhalb der Arme. Die Klappen sind nur in der Figur 3 visualisiert.

In dieser Ausführung ist zwischen den benachbarten Armen, jeweils ein Winkel von 45 Grad eingeschlossen. Das Säulenpaar C1, C1'ist dadurch in seiner Abstandrichtung der Säulen senkrecht zum Säulenpaar C3, C3' orientiert und das Säulenpaar C2, C2'ist senkrecht orientiert zum Säulenpaar C4, C4'. Die beiden Arme eines Säulenpaares sind vorzugsweise beide gleich lang. Der Abstand der Säulen eines Säulenpaares ist hingegen bei allen Säulenpaaren verschieden. Die Strömungsquerschnitte sind, abgesehen von den Orten der Ventilelemente 7, bei allen Säulen und Armen gleich.

Es ergibt sich dadurch, dass der aus den Säulen, den Armen und dem Basisbereich gebildete Tank in den möglichen horizontalen Richtungen richtungsabhängig verschiedene Eigenfrequenzen hat, nämlich hier in der Abstandsrichtung der Säulen für jedes Säulenpaar eine andere Eigenfrequenz. Diese Eigenfrequenz eines jeweiligen Säulenpaares kann durch die Ventilelemente geändert werden.

Die Figur 1 zeigt im rechten Bereich der Darstellung, dass der Tank vier verschiedene Wirkrichtungen entlang der Abstandrichtung der beiden Säulen jedes Säulenpaares hat. In jeder Wirkrichtung liegt eine andere Eigenfrequenz vor. Da die Längen der Säulenpaare, bzw. der Abstand zwischen deren Säulen vom Paar C1, C1' bis zum Paar C4, C4' steigt liegen ergibt sich für die Eigenfrequenzen, dass f1 > f2 > f3 > f4 ist, wobei der kürzesten Wirkrichtung, bzw. dem kürzesten Abstand zwischen den Säulen die höchste Frequenz zugeordnet ist.

Die Figur 2 zeigt die Frequenzverhältnisse bzgl. immer derselben Anregungsrichtung AR einer Schwingung, z.B. in einem Gebäude, in welchem das Dämpfungssystem zum Einsatz kommt.

Dabei zeigt die Figur 2 vier verschiedene Drehstellungen des Tanks. In der ersten und letzten Drehstellung ist jeweils ein Säulenpaar in der Anregungsrichtung ausgerichtet und ein anderes senkrecht dazu. Der Frequenzbeitrag im Frequenzwirkspektrum des Tanks fehlt daher bei diesen Drehstellungen für dasjenige Säulenpaar, welches hinsichtlich der Abstandsrichtung der Säulen senkrecht zur Anregungsrichtung AR orientiert ist. Es fehlt daher in der ersten Drehstellung die Frequenz f3 und in der letzten die Frequenz f1. Die Eigenfrequenz des Säulenpaares, welches hinsichtlich der Abstandsrichtung seiner Säulen in der Anregungsrichtung ausgerichtet ist, hat den höchsten Beitrag im Frequenzspektrum und erfährt somit die stärkste Dämpfung.

In der zweiten und dritten Drehstellung ist der Tank in einer Position, in welcher die Anregungsrichtung zwischen zwei benachbarten Säulenpaaren liegt. Es liegen zwar alle Frequenzen im Wirkspektrum des Tanks vor, aber je nach Drehstellung mit unterschiedlich starker Dämpfung.

An den Figuren 1 und 2 ist erkennbar, dass bei einer bestimmten Schwingung z.B. eines Gebäudes mit diesem System durch Rotation des Tanks bewirkt werden kann, dass eine oder mehrere der richtungsabhängigen Eigenfrequenzen in der Anregungsrichtung der Schwingung zur Wirkung kommt und die Schwingung hierdurch effektiv gedämpft werden kann.

Die Figur 3 zeigt die wesentlichen Bestandteile des Systems in seitlicher Schnittansicht. Der Tank mit seinen Säulen 2 der Säulenpaare C ist hier vollständig auf einer drehbaren Plattform 8 angeordnet und kann mit dieser in verschiedene Ausrichtungen um die vertikale Drehachse 11 rotiert werden. Die Plattform 8 ist über das Drehauflager 10 am Boden 12 einer beliebigen Struktur angeordnet, z.B. einem Gebäude oder einer Windkraftanlage oder ähnlichem. Es kann vorgesehen sein, die Plattform auch radial außen vom angetriebenen Drehauflager 10, z.B. in einem Bereich zwischen der radial am weitesten innen und der am weitesten außen liegenden Säule 2 drehbar zu stützen, z.B. mit einem kreisförmigen Schienensystem, auf dem sich die Plattform 8 abstützt. Dies ist jedoch nicht gezeigt.

Mit einem Antrieb 9 am Drehauflager kann die Drehung um die Achse 11 vorgenommen werden.

Mit Füllstandssensoren 1, insbesondere jeweils einem pro Säulenpaar C, kann der Flüssigkeitsstand in einer Säule 2 jedes Paares C dynamisch gemessen werden. Der statische Flüssigkeitsstand 4 ist im Tank visualisiert, ebenso wie die Auslenkrichtung 3 der Flüssigkeit in den Säulen 2.

Zur Erfassung der Schwingungen kann wenigstens ein Schwingungssensor 14 an der zu dämpfenden Struktur vorgesehen sein, z.B. ein Beschleunigungssensor oder Geschwindigkeitssensor. Insbesondere kann mit einem oder mehreren solcher Sensoren 14 die Anregungsrichtung der Schwingung und/oder deren Frequenz gemessen werden.

Mittels einer Steuerung 13 können die Messwerte des oder der Sensoren 14 ausgewertet werden und zumindest der Antrieb des Drehlagers 10 angesteuert werden, um den Tank in eine gewünschte Richtung zu verstellen. Ebenso kann die Ansteuerung der Ventilelemente 7 zur Feinabstimmung der Eigenfrequenz des Tanks in der Anregungsrichtung mit der Steuerung 13 vorgenommen werden.

Diese Anpassung der Eigenfrequenz in der benötigten Wirkrichtung des Tanks, die der Anregungsrichtung der Schwingung entspricht kann in-situ bei einem auftretenden Ereignis erfolgen, z.B. bei Erdbeben, Wind- und Wellenlasten.

## Patentansprüche

1. Flüssigkeitssäulendämpfungssystem, insbesondere zur Dämpfung von Schwingungen, bevorzugt Bauwerksschwingungen, umfassend einen mit einer Flüssigkeit gefüllten Tank, bei dem wenigstens drei zueinander beabstandete, bevorzugt vertikale Säulen (2) des Tanks, insbesondere zur Ausbildung kommunizierender Flüssigkeitssäulen, durch einen für alle Säulen (2) gemeinsamen Basisbereich (6) des Tanks verbunden sind, **dadurch**
**gekennzeichnet, dass** der Tank auf einer um eine vertikale Achse (11) rotierbaren Plattform (8) gelagert ist und in Richtungen senkrecht zur vertikalen Drehachse (11) richtungsabhängig verschiedene Eigenfrequenzen (f1, f2, f3, f4) aufweist, wobei das Flüssigkeitssäulensystem eingerichtet ist, den Tank durch Rotation um die Drehachse (11) in seiner für eine vorbestimmte Richtung wirkenden Eigenfrequenz (f1, f2, f3, f4) abzustimmen.

2. Flüssigkeitssäulendämpfungssystem nach Anspruch 1, **dadurch**
**gekennzeichnet, dass** richtungsabhängig unterschiedliche Eigenfrequenzen (f1, f2, f3, f4) erzeugt sind durch richtungsabhängig unterschiedliche in Schwingung versetzbare Flüssigkeitsvolumina, insbesondere durch richtungsabhängig unterschiedliche Querschnitte der Säulen (2) und/oder durch richtungsabhängig unterschiedlichen Abstände der Säulen (2) vom gemeinsamen Basisbereich (6), insbesondere von der gemeinsamen Drehachse (11).

3. Flüssigkeitssäulendämpfungssystem nach einem der vorherigen Ansprüche,
**dadurch gekennzeichnet, dass** jede Säule (2) an ihrem unteren Ende in einen eigenen horizontal erstreckten Arm übergeht, der in den gemeinsamen Basisbereich (6) mündet.

4. Flüssigkeitssäulendämpfungssystem nach Anspruch 3, **dadurch**
**gekennzeichnet, dass** der horizontal erstreckte Arm jeder Säule (2) zwischen dem unteren Ende der Säule (2) und dem gemeinsamen Basisbereich (6) erstreckt ausgebildet ist, bevorzugt geradlinig, insbesondere horizontal, erstreckt ausgebildet ist, insbesondere in radialer Richtung bezüglich eines gemeinsamen Punktes, insbesondere eines gemeinsamen Mittelpunktes im gemeinsamen Basisbereich (6), um den die Säulen (2) herum angeordnet sind, vorzugsweise um den herum der gesamte Tank drehbar ist.

5. Flüssigkeitssäulendämpfungssystem nach einem der vorherigen Ansprüche,
**dadurch gekennzeichnet, dass** der Tank wenigstens zwei, vorzugsweise wenigstens drei Säulenpaare (C1, C1', C2, C2', C3, C3', C4, C4') aufweist, wobei die zwei Säulen (2) wenigstens eines Säulenpaares (C1, C1', C2, C2', C3, C3', C4, C4'), vorzugsweise die zwei Säulen (2) von jedem Säulenpaar (C1, C1', C2, C2', C3, C3', C4, C4') um einen Ort im Basisbereich (6) aller Säulen (2), vorzugsweise um die Drehachse (11) herum um 180 Grad beabstandet sind, vorzugsweise wobei die Arme beider Säulen (2) eines Säulenpaares (C1, C1', C2, C2', C3, C3', C4, C4') eine gemeinsame durch den Basisbereich (6), insbesondere durch die Drehachse (11) verlaufende Mittenachse aufweisen und der Tank bei jedem Säulenpaar (C1, C1', C2, C2', C3, C3', C4, C4') in der Verbindungsrichtung der beiden Säulen (2) eine andere Eigenfrequenz (f1, f2, f3, f4) hat.

6. Flüssigkeitssäulendämpfungssystem nach Anspruch 5, **dadurch**
**gekennzeichnet, dass** der Abstand zwischen den Säulen (2) eines Säulenpaares (C1, C1', C2, C2', C3, C3', C4, C4') für wenigstens einige, vorzugsweise alle Säulenpaare (C1, C1', C2, C2', C3, C3', C4, C4') unterschiedlich ist, vorzugsweise wobei die Innenquerschnitte aller Säulen (2) und Arme gleich sind, insbesondere bis auf eine maximale Abweichung von plus/minus 20 %, bevorzugt von plus/minus 10 %.

7. Flüssigkeitssäulendämpfungssystem nach Anspruch 6, **dadurch**
**gekennzeichnet, dass** die Arme aller Säulen (2) im gleichen radialen Abstand zur Drehachse (11) in den gemeinsamen Basisbereich (6) einmünden.

8. Flüssigkeitssäulendämpfungssystem nach Anspruch 6 oder 7, **dadurch**
**gekennzeichnet, dass** der radiale Abstand zwischen den Säulen (2) eines Säulenpaares (C1, C1', C2, C2', C3, C3', C4, C4') bei allen Säulenpaaren (C1, C1', C2, C2', C3, C3', C4, C4') gleich ist, wobei die Innenquerschnitte der Säulen (2) und Arme bei den Säulenpaaren (C1, C1', C2, C2', C3, C3', C4, C4') für jedes Paar (C1, C1', C2, C2', C3, C3', C4, C4') unterschiedlich sind.

9. Flüssigkeitssäulendämpfungssystem nach einem der vorherigen Ansprüche,
**dadurch gekennzeichnet, dass** die Säulen (2) um einen Punkt, insbesondere um einen Mittelpunkt im Basisbereich (6) vorzugsweise um die vertikale Drehachse (11) im Basisbereich (6) gleichmäßig angeordnet sind, bevorzugt mit jeweils demselben Winkelabstand zwischen den Säulen (2) oder Säulenpaaren (C1, C1', C2, C2', C3, C3', C4, C4').

10. Flüssigkeitssäulendämpfungssystem nach einem der vorherigen Ansprüche 5 bis 9, **dadurch gekennzeichnet, dass** die Eigenfrequenz (f1, f2, f3, f4) in der Richtung der Beabstandung der Säulen (2) eines Säulenpaares (C1, C1', C2, C2', C3, C3', C4, C4'), bei wenigstens einem der Säulenpaare (C1, C1', C2, C2', C3, C3', C4, C4'), vorzugsweise bei allen änderbar ist durch wenigstens ein dem jeweiligen Säulenpaar (C1, C1', C2, C2', C3, C3', C4, C4') zugeordnetes Stellelement (7), insbesondere strömungsdämpfendes Stellelement (7), vorzugsweise drehbare Klappe (7) oder durch wenigstens ein das strömungsfähige Volumen eines Säulenpaares (C1, C1', C2, C2', C3, C3', C4, C4') änderndes Element.

11. Flüssigkeitssäulendämpfungssystem nach einem der vorherigen Ansprüche,
**dadurch gekennzeichnet, dass** die Eigenfrequenz (f1, f2, f3, f4) in der Richtung der Beabstandung einer Säule (2) zur Drehachse (11) änderbar ist durch wenigstens ein der Säule (2) und/oder deren Arm zugeordnetes Stellelement (7), insbesondere strömungsdämpfendes Stellelement (7), vorzugsweise drehbare Klappe (7) oder durch ein das strömungsfähige Volumen der Säule (2) änderndes Element.

12. Flüssigkeitssäulendämpfungssystem nach einem der vorherigen Ansprüche,
**dadurch gekennzeichnet, dass** es wenigstens einen Schwingungssensor (14) umfasst, mit dem die Schwingungsrichtung und/oder die Schwingungsfrequenz einer das Flüssigkeitssäulendämpfungssystem umfassenden Anordnung, insbesondere eines Gebäudes, als Messgröße erfassbar ist und das Flüssigkeitssäulendämpfungssystem eingerichtet ist, den Tank in Abhängigkeit wenigstens einer der erfassten Messgrößen zu rotieren, insbesondere den Tank durch dessen Rotation in eine für die erfasste Schwingung gegenüber der vorherigen Stellung stärker dämpfende Stellung zu bewegen.

13. Verfahren zur Frequenzabstimmung eines Flüssigkeitssäulendämpfungssystems, insbesondere zur Dämpfung von Schwingungen, bevorzugt Bauwerksschwingungen, umfassend einen mit einer Flüssigkeit gefüllten Tank, bei dem wenigstens drei zueinander beabstandete, bevorzugt vertikale Säulen (2) des Tanks, insbesondere zur Ausbildung kommunizierender Flüssigkeitssäulen, durch einen für alle Säulen (2) gemeinsamen Basisbereich (6) des Tanks verbunden sind, **dadurch gekennzeichnet, dass** der Tank auf einer um eine vertikale Achse (11) rotierbaren Plattform (8) gelagert ist und in Richtungen senkrecht zu der vertikalen Drehachse (11) richtungsabhängig verschiedene Eigenfrequenzen (f1, f2, f3, f4) aufweist und der Tank durch Rotation um die Drehachse (11) in seiner für eine vorbestimmte Richtung wirkenden Eigenfrequenz (f1, f2, f3, f4) abgestimmt wird.

## Claims

1. Liquid column damping system, in particular for damping vibrations, preferably structural vibrations, comprising a tank filled with a liquid, in which at least three, preferably vertical, columns (2) of the tank which are spaced apart from one another, in particular for forming communicating liquid columns, are connected by a base region (6) of the tank which is common to all columns (2), **characterized in that** the tank is mounted on a platform (8), which is rotatable about a vertical axis (11), and has direction-dependently different natural frequencies (f1, f2, f3, f4) in directions perpendicular to the vertical rotation axis (11), wherein the liquid column system is configured to adapt the natural frequency (f1, f2, f3, f4) of the tank acting in a predetermined direction by rotation about the rotation axis (11).

2. Liquid column damping system according to Claim 1, **characterized in that** direction-dependently different natural frequencies (f1, f2, f3, f4) are generated by direction-dependently different liquid volumes which can be made to oscillate, in particular by direction-dependently different cross sections of the columns (2) and/or by direction-dependently different distances of the columns (2) from the common base region (6), in particular from the common rotation axis (11).

3. Liquid column damping system according to either of the preceding claims, **characterized in that** each column (2) merges at its lower end into its own horizontally extending arm which opens into the common base region (6).

4. Liquid column damping system according to Claim 3, **characterized in that** the horizontally extending arm of each column (2) is formed so as to extend between the lower end of the column (2) and the common base region (6), is preferably formed so as to extend in a straight line, in particular horizontally, in particular in the radial direction with respect to a common point, in particular a common centre point in the common base region (6), around which the columns (2) are arranged, preferably around which the entire tank can be rotated.

5. Liquid column damping system according to one of the preceding claims, **characterized in that** the tank has at least two, preferably at least three, column pairs (C1, C1', C2, C2', C3, C3', C4, C4'), wherein the two columns (2) of at least one column pair (C1, C1', C2, C2', C3, C3', C4, C4'), preferably the two columns (2) of each column pair (C1, C1', C2, C2', C3, C3', C4, C4'), are spaced apart through 180 degrees around a location in the base region (6) of all columns (2), preferably around the rotation axis (11), preferably wherein the arms of both columns (2) of a column pair (C1, C1', C2, C2', C3, C3', C4, C4') have a common centre axis running through the base region (6), in particular through the rotation axis (11), and the tank has a different natural frequency (f1, f2, f3, f4) in the connecting direction of the two columns (2) in each column pair (C1, C1', C2, C2', C3, C3', C4, C4').

6. Liquid column damping system according to Claim 5, **characterized in that** the distance between the columns (2) of a column pair (C1, C1', C2, C2', C3, C3', C4, C4') is different for at least some, preferably all, column pairs (C1, C1', C2, C2', C3, C3', C4, C4'), preferably wherein the internal cross sections of all columns (2) and arms are the same, in particular except for a maximum deviation of plus/minus 20%, preferably of plus/minus 10%.

7. Liquid column damping system according to Claim 6, **characterized in that** the arms of all columns (2) open into the common base region (6) at the same radial distance from the rotation axis (11).

8. Liquid column damping system according to Claim 6 or 7, **characterized in that** the radial distance between the columns (2) of a column pair (C1, C1', C2, C2', C3, C3', C4, C4') is the same in all column pairs (C1, C1', C2, C2', C3, C3', C4, C4'), wherein the internal cross sections of the columns (2) and arms in the column pairs (C1, C1', C2, C2', C3, C3', C4, C4') are different for each pair (C1, C1', C2, C2', C3, C3', C4, C4').

9. Liquid column damping system according to any of the preceding claims, **characterized in that** the columns (2) are arranged uniformly about a point, in particular about a centre point in the base region (6), preferably about the vertical rotation axis (11) in the base region (6), preferably with the same angular distance between the columns (2) or column pairs (C1, C1', C2, C2', C3, C3', C4, C4') in each case.

10. Liquid column damping system according to any of the preceding Claims 5 to 9, **characterized in that** the natural frequency (f1, f2, f3, f4) can be changed in the direction of the spacing of the columns (2) of a column pair (C1, C1', C2, C2', C3, C3', C4, C4') in at least one of the column pairs (C1, C1', C2, C2', C3, C3', C4, C4'), preferably in all column pairs, by at least one actuating element (7) associated with the respective column pair (C1, C1', C2, C2', C3, C3', C4, C4'), in particular flow-damping actuating element (7), preferably rotatable flap (7), or by at least one element which changes the flowable volume of a column pair (C1, C1', C2, C2', C3, C3', C4, C4').

11. Liquid column damping system according to any of the preceding claims, **characterized in that** the natural frequency (f1, f2, f3, f4) can be changed in the direction of the spacing of a column (2) from the rotation axis (11) by at least one actuating element (7) associated with the column (2) and/or its arm, in particular flow-damping actuating element (7), preferably rotatable flap (7), or by an element which changes the flowable volume of the column (2).

12. Liquid column damping system according to any of the preceding claims, **characterized in that** it comprises at least one vibration sensor (14), by way of which the vibration direction and/or the vibration frequency of an arrangement comprising the liquid column damping system, in particular of a building, can be detected as a measurement variable and the liquid column damping system is configured to rotate the tank as a function of at least one of the detected measurement variables, in particular to move the tank, as a result of the rotation thereof, to a position which damps the detected vibration more strongly in relation to the previous position.

13. Method for frequency tuning a liquid column damping system, in particular for damping vibrations, preferably structural vibrations, comprising a tank filled with a liquid, in which at least three, preferably vertical, columns (2) of the tank which are spaced apart from one another, in particular for forming communicating liquid columns, are connected by a base region (6) of the tank which is common to all columns (2), **characterized in that** the tank is mounted on a platform (8), which is rotatable about a vertical axis (11), and has direction-dependently different natural frequencies (f1, f2, f3, f4) in directions perpendicular to the vertical rotation axis (11) and the natural frequency (f1, f2, f3, f4) of the tank acting in a predetermined direction is tuned by rotation about the rotation axis (11).

## Revendications

1. Système d'amortissement de colonne de liquide, en particulier pour amortir des vibrations, de préférence des vibrations d'ouvrage de construction, comprenant un réservoir rempli d'un liquide, dans lequel au moins trois colonnes (2) du réservoir, de préférence verticales, espacées les unes des autres sont reliées par une zone de fond (6) commune du réservoir à toutes les colonnes (2) en particulier pour former des colonnes de liquide communicantes, **caractérisé en ce que** le réservoir est monté sur une plateforme (8) pouvant tourner autour d'un axe vertical (11) et présente différentes fréquences propres (f1, f2, f3, f4) en fonction de la direction dans des directions perpendiculairement à l'axe de rotation (11) vertical, le système de colonne de liquide étant mis au point pour adapter la fréquence propre (f1, f2, f3, f4) du réservoir agissant dans une direction prédéfinie par rotation du réservoir autour de l'axe de rotation (11).

2. Système d'amortissement de colonne de liquide selon la revendication 1, **caractérisé en ce que** des fréquences propres (f1, f2, f3, f4) différentes en fonction de la direction sont générées par des volumes de liquide différents en fonction de la direction pouvant être amenés en vibration, en particulier par des sections transversales différentes en fonction de la direction des colonnes (2) et/ou par des distances différentes en fonction de la direction des colonnes (2) par rapport à la zone de fond (6) commune, en particulier par rapport à l'axe de rotation (11) commun.

3. Système d'amortissement de colonne de liquide selon l'une des revendications précédentes, **caractérisé en ce que** chaque colonne (2) devient sur son extrémité inférieure un bras propre s'étendant horizontalement, qui débouche dans la zone de fond (6) commune.

4. Système d'amortissement de colonne de liquide selon la revendication 3, **caractérisé en ce que** le bras s'étendant horizontalement de chaque colonne (2) est formé de manière à s'étendre entre l'extrémité inférieure de la colonne (2) et la zone de fond (6) commune, de manière préférée est formé de manière à s'étendre en ligne droite, en particulier horizontalement, en particulier dans la direction radiale par rapport à un point commun, en particulier un point central commun dans la zone de fond (6) commune, autour duquel les colonnes (2) sont disposées, de préférence autour duquel l'ensemble du réservoir peut tourner.

5. Système d'amortissement de colonne de liquide selon l'une des revendications précédentes, **caractérisé en ce que** le réservoir comporte au moins deux, de préférence au moins trois paires de colonnes (C1, C1', C2, C2', C3, C3', C4, C4'), les deux colonnes (2) d'au moins une paire de colonnes (C1, C1', C2, C2', C3, C3', C4, C4'), de préférence les deux colonnes (2) de chaque paire de colonnes (C1, C1', C2, C2', C3, C3', C4, C4'), étant espacées de 180 degrés autour d'un emplacement dans la zone de fond (6) de toutes les colonnes (2), de préférence autour de l'axe de rotation (11), de préférence les bras des deux colonnes (2) d'une paire de colonnes (C1, C1', C2, C2', C3, C3', C4, C4') comportant un axe central commun s'étendant à travers la zone de fond (6), en particulier à travers l'axe de rotation (11), et le réservoir dans chaque paire de colonnes (C1, C1', C2, C2', C3, C3', C4, C4') présentant une fréquence propre (f1, f2, f3, f4) autre dans la direction de liaison des deux colonnes (2).

6. Système d'amortissement de colonne de liquide selon la revendication 5, **caractérisé en ce que** la distance entre les colonnes (2) d'une paire de colonnes (C1, C1', C2, C2', C3, C3', C4, C4') est différente pour au moins certaines, de préférence toutes les paires de colonnes (C1, C1', C2, C2', C3, C3', C4, C4'), de préférence les sections transversales intérieures de toutes les colonnes (2) et de tous les bras étant identiques, en particulier à l'exception d'un écart maximal de plus/moins 20 %, de manière préférée de plus/moins 10 %.

7. Système d'amortissement de colonne de liquide selon la revendication 6, **caractérisé en ce que** les bras de toutes les colonnes (2) débouchent dans la zone de fond (6) commune à la même distance radiale par rapport à l'axe de rotation (11).

8. Système d'amortissement de colonne de liquide selon la revendication 6 ou 7, **caractérisé en ce que** la distance radiale entre les colonnes (2) d'une paire de colonnes (C1, C1', C2, C2', C3, C3', C4, C4') est identique pour toutes les paires de colonnes (C1, C1', C2, C2', C3, C3', C4, C4'), les sections transversales intérieures des colonnes (2) et des bras étant différentes pour chaque paire (C1, C1', C2, C2', C3, C3', C4, C4') dans le cas des paires de colonnes (C1, C1', C2, C2', C3, C3', C4, C4').

9. Système d'amortissement de colonne de liquide selon l'une des revendications précédentes, **caractérisé en ce que** les colonnes (2) sont disposées uniformément dans la zone de fond (6) autour d'un point, en particulier autour d'un point central dans la zone de fond (6), de préférence autour de l'axe de rotation (11) vertical, de manière préférée avec la même distance angulaire respective entre les colonnes (2) ou les paires de colonnes (C1, C1', C2, C2', C3, C3', C4, C4').

10. Système d'amortissement de colonne de liquide selon l'une des revendications précédentes 5 à 9, **caractérisé en ce que** la fréquence propre (f1, f2, f3, f4) peut être modifiée dans la direction de l'espacement des colonnes (2) d'une paire de colonnes (C1, C1', C2, C2', C3, C3', C4, C4'), pour au moins une des paires de colonnes (C1, C1', C2, C2', C3, C3', C4, C4'), de préférence pour toutes par au moins un élément de réglage (7) associé à la paire de colonnes (C1, C1', C2, C2', C3, C3', C4, C4') respective, en particulier un élément de réglage (7) d'amortissement d'écoulement, de préférence un clapet rotatif (7), ou par au moins un élément modifiant le volume apte à s'écouler d'une paire de colonnes (C1, C1', C2, C2', C3, C3', C4, C4').

11. Système d'amortissement de colonne de liquide selon l'une des revendications précédentes, **caractérisé en ce que** la fréquence propre (f1, f2, f3, f4) peut être modifiée dans la direction de l'espacement entre une colonne (2) et l'axe de rotation (11) par au moins un élément de réglage (7) associé à la colonne (2) et/ou à son bras, en particulier un élément de réglage (7) d'amortissement d'écoulement, de préférence un clapet rotatif (7) ou par un élément modifiant le volume apte à s'écouler de la colonne (2).

12. Système d'amortissement de colonne de liquide selon l'une des revendications précédentes, **caractérisé en ce qu'**il comprend au moins un capteur de vibrations (14), avec lequel la direction de vibrations et/ou la fréquence de vibrations d'un ensemble comprenant le système d'amortissement de colonne de liquide, en particulier d'un bâtiment, peuvent être détectées comme grandeur de mesure et le système d'amortissement de colonne de liquide est mis au point pour faire tourner le réservoir en fonction d'au moins une des grandeurs de mesure détectées, en particulier pour déplacer le réservoir, par sa rotation, dans une position amortissant plus fortement les vibrations détectées par rapport à la position précédente.

13. Procédé d'adaptation de fréquence d'un système d'amortissement de colonne de liquide, en particulier pour amortir des vibrations, de manière préférée des vibrations d'ouvrage de construction, comprenant un réservoir rempli d'un liquide, dans lequel au moins trois colonnes (2), de manière préférée verticales, espacées les unes des autres sont reliées par une zone de fond (6) du réservoir commune à toutes les colonnes (2) en particulier pour former des colonnes de liquide communicantes, **caractérisé en ce que** le réservoir est monté sur une plateforme (8) pouvant tourner autour d'un axe vertical (11) et présente différentes fréquences propres (f1, f2, f3, f4) en fonction de la direction dans des directions perpendiculairement à l'axe de rotation (11) vertical, et la fréquence propre (f1, f2, f3, f4) du réservoir agissant dans une direction prédéfinie est adaptée par rotation du réservoir autour de l'axe de rotation (11).
